# EUROPÄISCHE PATENTSCHRIFT

(11) **EP 0 736 564 B1**
(45) Veröffentlichungstag und Bekanntmachung des Hinweises auf die Patenterteilung: **02.07.2003**
(21) Anmeldenummer: 96108255.9
(22) Anmeldetag: 27.09.1991
(51) Int. Cl.: C08J 11/24

(54) **Verfahren zur Verwertung von Kunststoffen**
Process for recycling plastics
Procédé de recyclage de matières plastiques

(30) Priorität: 27.09.1990 DE 4030588; 27.09.1990 DE 4030614; 27.09.1990 DE 4030639; 10.05.1991 DE 4115379
(43) Veröffentlichungstag der Anmeldung: 09.10.1996
(62) Teilanmeldung aus: 91917185.0
(73) Patentinhaber: Demuth, Michael, D-82049 Grosshesselohe (DE)
(72) Erfinder: Demuth, Michael, 82049 Grosshesselohe (DE); Holzapfel, Wolfgang, Dr., 84471 Schönau am Königsee (DE)
(74) Vertreter: Kolb, Helga, Dr. Dipl.-Chem.

(56) Entgegenhaltungen:
- GB-A- 797 228
- US-A- 3 300 417

## Beschreibung

Die Erfindung betrifft ein Verfahren zur Verwertung von kompakten und/oder porösen Kunststoffen, die teilweise oder ganz aus Polyurethankunststoffen bestehen.

Zweck der Erfindung ist die technische Verwertung von Polyurethanprodukten, vorzugsweise von Polyurethanschaumstoffabfällen, die in großen Mengen anfallen. Bei der Herstellung von Polyurethan(PUR)-Schaumstoffen fallen bis zu 30 % sortenreiner Abfall an. Ein steigender Anteil von Produkten aus Integralschaumstoffen, die selbst bei geringen Oberflächenfehlern bei sonst technisch einwandfreier Qualität ausgeschieden werden, z.B. bei der Autositzproduktion, machen eine sinnvolle Verwertung erforderlich, wobei diese möglichst im Bereich der eigenen Produktion erfolgen soll.

PUR-Altschäume, z.B. aus der Kraftfahrzeug- oder Möbelentsorgung, fallen in großen Mengen an. Sie enthalten zum Teil toxische Gase, z.B. Fluorchlorkohlenwasserstoffe, die zur Verbesserung des Herstellverfahrens und zur Erhöhung der thermischen Isoliereigenschaften zugesetzt worden sind. Diese Gase müssen vor oder während des Recyclingverfahrens möglichst umweltschonend entfernt und gesammelt werden. Im Anschluß an eine FCKW-Entfernung liegen die PUR-Schaumstoffe üblicherweise als Mahlgut mit einem Korndurchmesser von 1 bis 3 mm vor.

Dieses Schaummehl wird zur Zeit auf Deponien als Sondermüll gelagert. Die Kosten der Endlagerung sind enorm hoch. Wegen der geringen Kapazitäten der Deponien, den Schwierigkeiten bei der Einrichtung neuer Deponieflächen sowie wegen der chemischen Resistenz und der damit verbundenen geringen Zersetzung der PUR-Schäume und deren Verunreinigungen ist es geboten, die Produkte einer wirtschaftlichen Wiederverwertung zuzuführen.

Erschwert wird die Wiederverwertung der Polyurethankunststoffabfälle durch mögliche Verunreinigungen, die den Polyurethanschäumen aufgrund technischer Vorgaben für den entsprechenden Einsatz bei der Herstellung zugegeben oder die beim Recyclingverfahren sekundär zugemischt werden, und die nur sehr kostspielig entfernt werden können. Gleichzeitig besteht ein Bedarf nach einem Verfahren, welches neben der Aufbereitung von PUR-Altmaterial auch im gleichen Verfahren die Aufbereitung anderer Kunststoffe erlaubt.

Als Beispiel sollen die Verunreinigungen von Altschaum aus der Kühlschrankentsorgung genannt werden. Der Polyurethanschaum enthält ca. 5 bis 10 % FCKW; je nach Herkunft des Kühlschranks enthält das PUR-Mahlgut Farben- und Lackreste, Papier- und Metallfolienreste, diverse Kunststoffe und elastomere Kabelreste. Eine gemeinsame Verwertung des Abfalls ohne weitere Trennprozesse ist erwünscht, aber bis heute nicht möglich. Der Anteil der Verunreinigungen liegt häufig bei ca. 10 %, kann aber bis auf ca. 30 % und mehr ansteigen.

Ein weiterer Problemabfall ist die sogenannte Leichtfraktion aus der Automobilverwertung. Sie besteht zu etwa 70 % aus PUR-Schaum. Die restlichen 30 % bilden eine Vielzahl von Kunststoffen unterschiedlichster Zusammensetzung. Gummi- und Polyolefinabfälle sind ebenso vorhanden wie Metall- und Kabelreste, Glas und gelegentlich Holz. Das Ganze ist durch Öl und Fett, Wasser und Bremsflüssigkeit und jede Art von Schmutz verunreinigt. Es besteht die Notwendigkeit, für diesen Abfall eine kostengünstige Wiederverwertung zu finden, um eine Deponierung auf Sonderdeponien zu vermeiden.

Ein Verwertungsverfahren, welches aus diesen Abfallprodukten ein Neuprodukt mit zufriedenstellenden technischen Eigenschaften herstellen läßt, ist daher sowohl aus ökonomischer als auch ökologischer Sicht erstrebenswert.

In manchen Fällen ist die zusätzliche Zumischung von geeigneten Kunststoffen in Polyurethanprodukte, z.B. für die Erhöhung der Druckfestigkeit von Hartschaum, wünschenswert. Die Einbindung von Kunststoffen in eine Schaummatrix kann zu einer wirtschaftlichen Verbesserung führen und erleichert die Entsorgung, wenn zu diesem Zweck Kunststoffabfälle verwendet werden.

Spezielle Probleme bringt z.B. die Verwertung von Autositzen mit sich, die eine Gewebeschicht aufweisen, die bei der Herstellung als Trennmittel gegenüber den Metallformen dient, die Festigkeit der Schaumoberfläche erhöht und den Sitzkomfort verbessert. Bei der Wiederverwertung müssen bisher Schaum und Gewebe, sofern sie überhaupt wiederverwertet werden, mechanisch getrennt werden und getrennt behandelt oder wiederverwertet werden. Dabei werden die Weich-Polyurethanschäume meist als Flocken zur Herstellung von Kissen oder Teppichunterlagen verwendet, die Stoffreste dagegen deponiert oder verbrannt.

Zweck der vorliegenden Entwicklung ist die nebenproduktfreie Herstellung neuer Polyole, die mit Isocyanaten oder anderen geeigneten Härtersystemen härtbar sind und deren Hydroxylgruppen-Gehalt während des Recyclingverfahrens oder durch eine zusätzliche chemische Behandlung auf einen gewünschten Gehalt eingestellt werden kann, unter zusätzlicher Beimischung von Kunststoffen und anderer Füllstoffe, die im kompatibler Weise in die späteren Neuprodukte eingebaut werden können.

In der Patentliteratur werden eine Reihe von Lösungen vorgeschlagen, vorzugsweise Polyurethanschaum wegen seiner großen Oberfläche und der damit verbundenen leichten Bearbeitbarkeit wieder in Polyole zurückzuführen. Die glykolytische Zersetzung mittels organischer Säuren, Aminen oder Glykolen, teilweise unter Verwendung von Katalysatoren, erhöhten Drücken und bei Temperaturen um 200°C, nimmt dabei den größten Raum ein. Keines der beschriebenen Verfahren konnte sich jedoch aus Kostengründen durchsetzen. Nachteilig für die Hydrolyse von PUR ist außerdem, daß bei der Durchführung des Verfahrens Nebenprodukte entstehen, die aus toxischen Gründen abgetrennt und aufwendig entsorgt werden müssen. Diese Verfahren sehen somit nur die Verarbeitung von reinen PUR-Produkten vor; Verunreinigungen müssen vorher oder während des Verfahrens entfernt werden; die für den Prozeß erforderlichen Apparate und Einrichtungen sind aufwendig; die Energiekosten hoch. Es ist daher verständlich, daß sich diese Methoden nicht durchsetzen konnten, und daß nach neuesten Erkenntnissen diese Verfahren kaum Aussicht haben, in Zukunft eingesetzt zu werden.

GB-A-797 228 beschreibt ein Verfahren zur Wiederverwertung von Abfall aus flexiblen Polymermaterialien mit Zellstruktur. Diese Polymermaterialien enthalten Gruppen mit aktiven Wasserstoffatomen und bestehen insbesondere aus Polyestern und Polyesteramiden. Die Abfallprodukte werden in einer flüssigen Reaktionsmischung aus den Polymermaterialien einem organischen Polyisocyanat und Wasser gelöst und zu Schaumprodukten umgesetzt.

US-A-3 300 417 offenbart ein Verfahren zur Verwertung von Polyurethankunststoffen. Hierbei werden die Polyurethankunststoffe in Gegenwart des Metallkatalysators in einer organischen Flüssigkeit, die im wesentlichen frei von Carbonsäure-primären und sekundären Aminogruppen ist, gelöst, wobei die Urethangruppen vollständig dissoziiert werden.

Bei Anwendung der vorstehend genannten Verfahren des Standes der Technik erhöht sich aus bekannten Gründen darüberhinaus bei der hydrolytischen Zersetzung die Hydroxylzahl des entstehenden Polyols. Dies führt zu einem Mehrverbrauch an Isocyanat bei Aushärtung der Neuprodukte. Abgesehen von der damit verbundenen Kostenerhöhung werden dabei allgemein verhältnismäßig harte Neuprodukte erhalten, was in den meisten Fällen unerwünscht ist.

Auch das bereits im Maßstab einer Pilotanlage erforschte System der pyrolytischen Zersetzung konnte sich ebenfalls nicht durchsetzen, da die Kosten im Verhältnis zum Nutzen zu hoch lagen und bei nicht sortenreinen Kunststoffen unerwünschte Nebenprodukte auftraten, die für sich entsorgt werden mußten, was wiederum die Kosten des Verfahrens erhöhte.

Eine gezielte gemeinsame Verwendung von PUR-Produkten mit anderen Kunststoffen mit dem Ziel der gemeinsamen Weiterverarbeitung ist nicht bekannt, sie ist aber sinnvoll und erforderlich.

Der Erfindung liegt die Aufgabe zugrunde, ein Recyclingverfahren für Polyurethanprodukte unter Vermeidung neuer, zusätzlicher Nebenprodukte zu entwickeln. Dabei soll dieses Verfahren die gemeinsame Verwertung und Auflösung von Polyurethanabfallstoffen mit anderen Stoffen ermöglichen. Zu derartigen Stoffen zählen Kunststoffe im weitesten Sinne, speziell solche, die mit Polyurethanen verbunden, verschäumt oder vermischt vorliegen, z.B. Überzugsstoffe von Sitzen, Papiere, Vliese, Kunststoff- und/oder Metallfolien, sowie Klebstoffe, Farben, Lacke und ggf. Elastomere, die als Polymerblends angesehen werden können.

Eine weitere Aufgabe der Erfindung ist die möglichst vollständige Erhaltung der chemischen Bindungen der Polyurethanabfälle beim Recyclingprozeß. Falls' erforderlich, soll mit Hilfe des erfindungsgemäßen Verfahrens nach dem Anbinden bzw. Auflösen der Polyurethanabfälle die Hydroxylgruppen-Zahl des erhaltenen Reaktantengemisches in optimaler Weise für die nachfolgende Weiterverarbeitung eingestellt werden.

Im weiteren stellt sich die Erfindung auch die Aufgabe der Herstellung von leicht weiterverarbeitbaren Prepolymeren aus der ersten Reaktionsmischung.

Die vorstehende Aufgabe wird gemäß der Erfindung durch ein Verfahren zur Verwertung von kompakten oder porösen Kunststoffen, die ganz oder teilweise aus Polyurethankunststoffen bestehen, gelöst, welches dadurch gekennzeichnet ist, daß man die Kunststoffe zu einem Reaktionsgemisch aufbereitet, das in einem Diisocyanat-Polyadditions-Verfahren zu neuen Endprodukten weiterverarbeitet werden kann ohne daß toxische oder zusätzliche Nebenprodukte entstehen, indem man die Kunststoffe
a) in geeigneten Polyolen löst und/oder chemisch unsetzt; und
b) die Hydroxylzahl auf die gewünschte Größe einstellt;
c) gegebenenfalls das Reaktionsgemisch aus a) und b) in ein Polyurethan-Prepolymere verwandelt,
d) die einzelnen Reaktionsgemische a) bis b) zu einem Polyurethanprodukt oder mit Hilfe anderer geeigneter Härtersysteme zu einem Kunststoff weiterverarbeitet.

Im weiteren wird eine Vorrichtung zur Durchführung des Verfahrens beschrieben, wobei die Vorrichtung, welche einen Reaktionskessel mit Rühraggregat und Kondensor sowie Schutzgaseinrichtungen umfaßt, und dadurch gekennzeichnet ist, daß diese zumindest teilweise Auskleidungen mit einem Dehydrationskatalysator in Form von z.B. Schikanen oder plattenförmigen Gleitflächen oder körnigen, dispergierbaren Oberflächen aufweist.

Mit Hilfe des erfindungsgemäßen Verfahrens können universell alle PUR-Kunststoffe aufbereitet werden, die nach dem Diisocyanat-Polyadditions-Verfahren hergestellt sind, sowie deren chemische Modifikationen in kompakter und/oder poröser Form.

Das erfindungsgemäße Verfahren erlaubt die Mitverwendung im Löse prozeß und den Zusatz von ggf. Kunststoffen, insbesondere löslichen Kunststoffen, Harzen, Wachsen, Elastomeren, Farben, Lacken, Papier, Metallfolien und organischen und/oder mineralischen Fasern zum Behandlungsmittel, wobei dieselben vor, während oder nach dem eigentlichen Löse prozeß zugesetzt werden können. Derartige Kunststoffe können z.B. sein: Polyvinylchlorid, Styrol/Acrylnitril (24-29 %), Polyhydroxyether von Bisphenol A, Polycarbonat, Nitrocellulose, Cellulosebutyrat, Cellulosepropionat, Polyepichlorhydrin, Polyvinylidenchlorid, Styrol/Allylalkoholcopolymere.

Teilweise verträgliche Kunststoffe, z.B. Polypropylen, Poly(buten-1), Polyethylen, Naturkautschuk, Styrol/Butadienelastomere, Styrol/Butadienblockcopolymere, ungestättigte Polyester, Polyvinylacetat, Polyvinylbutyral, Polybutadien, Ethylen/Propylenkautschuk, Polyisobutylen, Polyoxymethylen, Polyoxyethylen, können über Lösungsvermittler eingebracht werden.

Außerdem ist es bei dem erfindungsgemäßen Verfahren möglich, für die Weiterverarbeitung zu neuen PUR-Produkten Komponenten zuzugeben, die deren chemische Eigenschaften positiv beeinflussen, wie z.B. durch Einführung von flammhemmenden chemischen Gruppen in das neu entstandene Polyol. Geeignete Zusatzstoffe sind neben Flammschutzmitteln Weichmacher, Pigmente, Füllstoffe und/oder Fasern.

Die Verfahrensschritte des erfindungsgemäßen Verfahrens können gleichzeitig oder nacheinander durchgeführt werden.

Die erste Stufe der Wiederverwertung der Kunststoffabfälle ist die Zerkleinerung und, sofern erforderlich, die Reinigung. Die Kunststoffe und ggf. die Zusatzstoffe werden vorzugsweise in Schneidmühlen oder Shreddern auf eine Korngröße von ca. 10 bis 30 mm vorzerkleinert und ggf. weiter in Zentrifugalmühlen auf eine Korngröße von < 1 mm Durchmesser feinzerkleinert.

Sortenreine PUR-Schaumabfälle, gleichgültig ob es sich um Hart-, Weich-, Polyether- oder Polyesterschaum oder deren Mischungen handelt, werden, falls erforderlich, zu Flocken von einer Größe von 10 bis 50 mm zerkleinert; eine Reinigung erübrigt sich.

Bei FCKW-haltigen oder verunreinigten Abfällen oder bei Gemischen mit anderen Kunststoffen und bei kompakten PUR-Abfällen werden diese auf eine Korngröße von 1 bis 2 mm gemahlen und vom löslichen Schmutz befreit.

Die Polyurethanabfälle werden in Polyolen gelöst und/oder chemisch umgesetzt werden. Die Polyole sind bevorzugt ungesättigt. Als Lösungsmittel können als Polyole ε- Caprolactonpolyole verwendet werden.

Es wurde überraschenderweise gefunden, daß diese PUR-Kunststoffe in der Wärme leicht lösen und daß diese Lösung sofort oder später leicht wieder zu PUR-Neuprodukten verarbeitet werden kann.

Daher erweisen sich die Epsilon-Caprolactone als äußerst interessante Gruppe.

Monomere, polymere und copolymere Lactone und/oder deren Derivate bzw. Gemische derselben, nämlich Epsilon-Caprolactonpolyole und Epsilon-Caprolactonacrylatpolyole zeigen ein ausgezeichnetes Lösungsverhalten gegenüber Polyurethankunststoffen; es können Weich- und Hartschäume auf der Basis von Polyether oder Polyesterpolyolen gelöst werden, wobei auch gleichzeitig eine Auflösung andersartiger Kunststoffe erfolgt.

Epsilon-Caprolactonpolyole und deren Derivate lassen sich in Monomer-, Oligomer- und Polymerform als Lösungsmittel für Kunststoffe verwenden. Bei den Monomeren ist allerdings die Polymerisation durch Zugabe entsprechender Inhibitoren, z.B. Mono- oder Polycarbonsäuren, zu unterbinden.

Mit steigendem Polymerisationsgrad und sinkendem Hydroxylgehalt verbessert sich die Lösbarkeit von Kunststoffen in diesen Lösungsmitteln. Die hochmolekularen Polymere sind mit nahezu allen Kunststoffen verträglich und können diese lösen, so z.B. Polyolefine, Olefinharze, Vinylharze, Polyamide, Phenol- und Harnstoffharze, Cellulosederivate sowie eine Reihe von Elastomeren, einschließlich Naturkautschuk. Die Liste ist nicht vollständig; sie soll die möglichen Mischungen, die auch untereinander möglich sind, andeuten.

Gute, teilweise ausgezeichnete Ergebnisse werden auch erhalten, wenn Epsilon-Caprolactone unterschiedlichen Polymerisationsgrades, Hydroxylgehalts und unterschiedlicher Zusammensetzung verwendet werden.

Vinylgruppenhaltige Polyole, wie Copolymerisate des Epsilon-Caprolactons mit hydroxylgruppenhaltigen Acrylaten, Styrol-Alkohol-Copolymeren oder Polyestern sind ebenfalls geeignet. Bevorzugt werden Polymere des Epsilon-Caprolactons mit endständigen Hydroxyl- oder Acrylatgruppen mit unterschiedlichen Polymerisationsgraden eingesetzt.

Lactonpolyole, ganz besonders polymere Derivate des Epsilon-Caprolactons, z.B. im Handel erhältliche Epsilon-Caprolactonpolyole und Epsilon-Caprolactonacrylatpolyole, lösen Polyurethane in Form von Hart- oder Weichschäumen leicht und ohne Nebenprodukte, auch bei Anwesenheit von anderen Kunststoffen, Farben und Lacken sowie Harzen und Wachsen. Typisch für das monomere Epsilon-Caprolacton ist die leichte Ringöffnung des siebengliedrigen Rings bei Reaktion mit Verbindungen, die reaktive Wasserstoffatome aufweisen, z.B. Alkohole, Amine und Wasser. Es entstehen dabei Hydroxycapronsäureester, Hydroxycapronamide und Hydroxycapronsäuren. Die Lösung kann problemlos wieder zu Schaum, Folien oder Gußmassen verarbeitet werden. Zerkleinerte Verunreinigungen durch Papier oder Pappe, Metall und/oder Kunststoffolien stören bei der Schaumherstellung nicht.

Die vorstehend genannten Epsilon-Caprolactonpolyole und Epsilon-Caprolactonacrylatpolyole werden nach folgendem Reaktionsschema hergestellt:

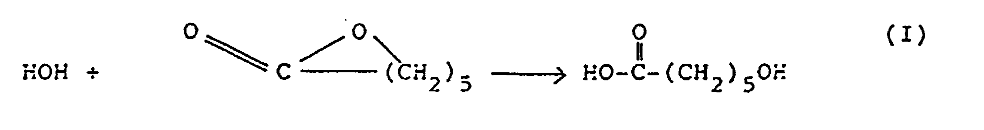

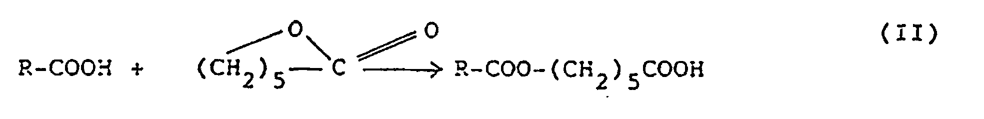

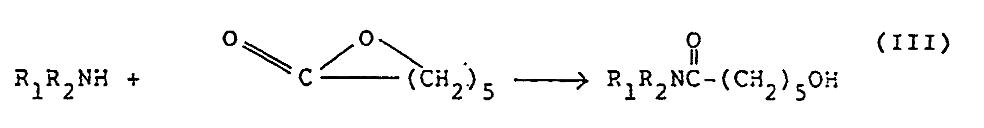

Die vorstehenden Verbindungen lassen sich in an sich bekannter Weise zu den Epsilon-Caprolactonpolyolen und Epsilon-Caprolactonacrylatpolyolen polymerisieren. Für die Umsetzung mit Säure verwendet man Carbonsäure, bevorzugt Hydroxycarbonsäuren oder ungesättigte Säuren, wie z.B. Acrylsäure oder besonders bevorzugt ungesättigte Hydroxycarbonsäuren. R₁R₂NH in der vorstehend allgemeinen Formel III steht allgemein für primäre (R₂ = H) und sekundäre organische Aminverbindungen. Insbesondere bedeutet R₁R₂NH polyvalente Amine, wie z.B. Ethylendiamin, Ethanolamin und/oder aromatische Amine.

Der Polymerisationsgrad der auf diese Weise erhaltenen Polymere liegt im Bereich von 500 bis 5.000, vorzugsweise 500 bis 3.000. Die Hydroxylzahl beträgt ca. 200 bis 20 - 30, wobei die Hydroxylzahl mit steigendem Molekulargewicht abnimmt und im Bereich der Hochpolymeren bei 2 bis 5 liegt. Es können auch leicht extrudierfähige Hochpolymere mit einem Molekulargewicht von 20.000 bis 40.000 mit Hydroxylzahlen zwischen 2 und 5 erhalten werden.

Die Verwendung der vorstehend genannten Polyole ist hinsichtlich der erhaltenen Endprodukte vorteilhaft, die sie eine verbesserte Flexibilität, eine höhere Zähigkeit, eine bessere Haltbarkeit (UV/Feuchtigkeitsresistenz) aufweisen.

Bei der Durchführung des erfindungsgemäßen Verfahren steigt die Viskosität des Reaktionsgemisches stark an, was darauf hindeutet, daß die Polyurethankunststoffe in wesentlichen nur gelöst und nur im geringen Ausmaß zersetzt werden.

Ein bevorzugtes Beispiel für ein Caprolactonacrylat-Monomer stellt das unter der Bezeichnung Tone^{R} M-100 in dem Monomer vertriebene Produkt der Firma Union Carbide dar. Die in den Acrylatderivaten vorliegenden zweifunktionellen Gruppen erlauben für die Weiterpolymerisation eine Umsetzung der Hydroxylgruppe bzw. über die Acryldoppelbindung. Die vorstehende Verbindung Tone^{R} M-100 Monomer zeichnet sich insbesondere durch einen sehr niedrigen Dampfdruck aus, der unter dem üblicherweise verwendeter Acrylate liegt.

Zur Beschleunigung des Auflöseprozesses können die Polyurethankunststoffe zuvor zerkleinert werden. Sofern die Schaumabfälle mit Papier oder Pappe, nativen Fasern oder synthetischen Zellulosefasern verunreinigt sind, ist eine Zerkleinerung der Abfälle auf eine Korngröße von vorzugsweise < 1 mm angezeigt. Nach dem Löseprozeß ist eine Debibrillierung notwendig, um die Einzelfasern freizulegen; sie stören bei der Wiederverschäumung nicht, in einigen Fällen wird eine Stabilisierung der aufsteigenden Schaummasse beobachtet. Im Lösungsmittel nicht lösliche Fasern müssen allerdings in der jeweiligen Masse gut verteilt werden. Synthetische Fasern sind wie die entsprechenden Kunststoffe zu behandeln. Sie werden, soweit löslich, entweder angequollen oder gelöst in das spätere Polyurethansystem eingebaut. Farben, Lacke und Anstrichstoffe lösen sich nahezu alle in Epsilon-Caprolactonpolyolen und Epsilon-Caprolactonacrylatpolyolen. Sie stören die Weiterverarbeitung nicht. Elastomere, die in einer Korngröße von < 1 mm vorliegen, werden in gemahlener Form oder zum Teil gelöst eingebaut. Aluminium und Verbundfolien können als Mahlgut nit in den Lösuncsprozeß gegeben werden. Bei reinen Aluminiumfolien ist ein geringer Zusatz von Polycarbonsäuren sinnvoll, sie erleichtern die Aufnahme in die Matrix der Endprodukte und wirken als Haftvermittler zu metallischen Oberflächen. Die im Schaum vorhandenen Hilfsstoffe, wie Flammschutzmittel, Füllstoffe, biozide Mittel, Antioxidanzien, Katalysatoren und Beschleuniger, stören weder bei der Auflösung noch bei der späteren Weiterverarbeitung.

Bei der Verwertung der Polyurethankunststoffe, ggf. in Anwesenheit von Verunreinigungen und Zusätzen, entstehen keine freien, insbesondere toxischen Nebenprodukte; die erhaltene Masse kann in Behältern abgefüllt und entweder sofort oder später weiterverarbeitet werden. Lagerprobleme treten nicht auf. Die festen und/oder wachsartigen Massen müssen vor der Weiterverarbeitung so weit erwärmt werden, daß sie pump- und dosierfähig werden. Sie können zu Prepolymeren umgesetzt werden; dadurch kann die Viskosität und/oder Verarbeitungstemperatur gesenkt werden. Unmittelbar vor Weiterverarbeitung werden zu der so gewonnenen Masse Isocyanatverbindungen und weitere Zusatzstoffe gegeben, und es wird wieder zu Polyurethanprodukten geschäumt. Die Lactonlösung, welche die zersetzten Polyurethankunststoffe enthält, kann auch als Zusatz für andere Polyurethanschaumsysteme verwendet werden. Es können Weich- oder Hartschäume unterschiedlicher Qualität hergestellt werden. Dies hängt unter anderem davon ab, ob zwei- oder dreifunktionelle Epsilon-Caprolactonpolyole eingesetzt werden. Ferner spielt hierfür auch das Molekulargewicht und die Hydroxylzahl der Polyole eine Rolle. Epsilon-Caprolactonpolyole besitzen ausschließlich primäre Hydroxylgruppen und eine aliphatische Polyesterkette, woraus eine hohe Hydrolysebeständigkeit, ausgezeichnetes Tieftemperaturverhalten und sehr gutes Rückstellverhalten resultiert. Der Polymerisationsgrad liegt in engen Grenzen. Dadurch werden weiche Schäume niederer Dichte bei tieferen Herstelltemperaturen erhalten. Diese Eigenschaften werden auf die Polyurethansekundärprodukte übertragen. Aufgrund der einheitlichen Struktur der Epsilon-Caprolactonpolyole oder der Epsilon-Caprolactonacrylatpolyole liegen daher die Eigenschaften der Polyurethanendprodukte in engen Grenzen. Solche Produkte können auch variierende Rohstoffe unterschiedlichster Eigenschaften und Herkunft mit aufnehmen, ohne daß die Eigenschaften der Sekundärprodukte zu weit differieren. Aus den Reaktionsprodukten können Formteile, Platten oder Schaum hergestellt werden. Die neuen Schäume können zum Ausfüllen von Hohlkörpern verwendet werden; es können Ortsschäume hergestellt werden.

Epsilon-Caprolactonacrylatpolyole haben folgende Vorteile:
- Die leichte Polymerisierbarkeit der Caprolactonderivate führt zu einheitlichen Polymerisationsprodukten mit enger Molekulargewichtsverteilung; dies führt zu niedrigen Viskositäten und Schmelzpunkten, was für die Lösung der Schäume von Vorteil ist. Ganz besonders sind hierfür monomere und polymere Epsilon-Caprolactonacrylatpolyole, gleichgültig ob ein-, zwei- oder dreifunktional, geeignet.
- Die Lösung und/oder Zersetzung der Polyurethankunststoffe kann bei Temperaturen zwischen 100 und 200°C chargenweise oder kontinuierlich durchgeführt werden. Für die thermische Behandlung eignen sich heizbare Rührkessel, speziell solche, die mit Druck beaufschlagt werden können. Die besten Ergebnisse werden allerdings mit kontinuierlich arbeitenden Durchflußmaschinen, wie kontinuierlichen Knetern, heizbaren Schneckenpressen oder ähnlichen Geräten erzielt.
- Zur Beschleunigung der Lösung und/oder Zersetzung können Katalysatoren zugegeben werden. Von der Verwendung von Alkalisalzen ist jedoch wegen des Auftretens von Nebenprodukten, die vor der Weiterverarbeitung abgetrennt werden müssen, im wesentlichen abzusehen. Die Lösungsgeschwindigkeit wird durch Amine beschleunigt; hier seien speziell tertiäre Amine erwähnt, z.B. Morpholine, sowie tertiäre Amine mit aktiven Wasserstoffatomen, z.B. Triethanolamin, und deren Umsetzungsprodukte mit Ethylenoxid oder Propylenoxid.
- Durch den Zusatz von Harnstoff kann die Solubilisierungs- und/oder Zersetzungstemperatur in den Bereich von 100 bis 120°C gesenkt werden. Glykole, speziell Diethylenglykol, welches die Quellung der Schäume stark begünstigt, können dem Caprolactonacrylat zur Beschleunigung der Lösung ebenfalls zugesetzt werden.

Es können noch weitere als die hier aufgeführten Beispiele als Katalysatoren verwendet werden, jedoch sollten nur solche eingesetzt werden, die nicht zu Verbindungen führen, die spätere Reaktionen stören können oder die die Katalysatoren zu toxischen flüssigen oder gasförmigen Substanzen zersetzen, und daher ausgewaschen oder abgetrennt werden müssen.

Es werden je nach zugesetzter Polyurethanschaummenge klare bis trübe, flüssige bis wachsartige Lösungen erhalten. Es hat sich herausgestellt, daß die Lösung und/oder Zersetzung nicht 100 %ig sein muß. Bei der späteren Wiederverarbeitung, z.B. zu Schäumen, stören die nur partiell zersetzen Polyurethanschaumanteile in keiner Weise.

Bei der Lösung und Zersetzung von Polyurethanen ist es in den meisten Fällen erforderlich, die Hydroxylzahl zu senken, um die zur Vernetzung erforderliche Isocyanatmenge aus Kostengründen gering zu halten. Außerdem werden weichere PUR-Schäume erhalten, wenn die Zahl der möglichen Vernetzungspunkte reduziert wird. Darüberhinaus ist es wünschenswert, in der Produktion möglichst mit identischen Rohstoffen und damit gleichen Rezepten zu arbeiten.

In anderen Fällen ist die Erhöhung der Hydroxylzahl erforderlich, um härtere Endprodukte zu erhalten. Beide Korrekturen sind verhältnismäßig leicht zu bewerkstelligen.

Die Verminderung der Hydroxylzahl kann durch teilweises Verestern der OH-Gruppen erfolgen. Neben Mono-, Di- oder Polycarbonsäuren können auch dimerisierte Säuren oder Säureanhydride, Fettsäuren oder ungesättigte Säuren verwendet werden. Die Auswahl der Säure richtet sich nach den technischen Eigenschaften, die das Endprodukt aufweisen soll.

Es können, und dies ist bevorzugt, anorganische Säuren verwendet werden, wie z.B. Schwefel- oder Phosphorsäure, oder Organo-Phosphorsäuren. Die Phosphorsäuren haben den Vorteil, daß ihre Salze als flammhemmende Zusätze in den Endprodukten dienen können. Die Veresterung kann bei den anorganischen Säuren leicht durch Zugabe von Metalloxiden oder Calciumsalzen abgebrochen werden. Diese Reaktionsprodukte können entweder als Füllstoffe im System bleiben oder leicht abfiltriert werden.

Eine weitere Methode stellt die Veretherung der OH-Gruppen sowie die Umsetzung mit Aminoharzen nach den Methoden der präparativen Chemie dar.

Eine wirkungsvolle Methode der Verminderung der OH-Gruppen ist die Dehydratisierung der OH-Gruppen. Die einfachste Methode ist die säurekatalytische Dehydratisierung unter Verwendung von Katalysatoren, z.B. von Zinksalzen, metallischem Zink oder Edelmetallen, wie z.B. Palladium.

Da die Verminderung nur einen Teil der Hydroxylgruppen betrifft, ist die Möglichkeit gegeben, schon beim Quell- oder Löseprozeß in einem ganz oder teilweise mit Katalysatoren ausgekleideten Reaktionskessel diese Operation durchzuführen. Da diese Reaktion im sauren Millieu abläuft, sind entsprechende Zusätze vorzunehmen. Die eingesetzten Säuren reagieren ebenfalls unter Veresterung, so daß auf alle Fälle eine genaue Steuerung der Reaktion durch laufende Bestimmung der Hydroxylzahl erforderlich ist. Der Abbruch der Reaktion ist wieder leicht durch Neutralisation durch calciumsalze möglich.

Sobald die erwünschte Hydroxylzahl erreicht ist, die durch analytische Überwachung des Reaktionsprozesses erkannt wird, ist die Reaktion abzubrechen, die Temperatur zu senken und die unerwünschten Festkörper sind abzutrennen.

Prepolymere in der Polyurethanverarbeitung bestehen aus Polyolen, die mit NCO teilweise oder im Überschuß vorreagiert wurden. Sie werden dann wichtig, wenn die Reaktionsgeschwindigkeit der vorhandenen Polyole erhöht werden soll. Unter anderem kann auf diese Weise der unerwünscht hohe Dampfdruck, z.B. von TDI (Toluylendiisocyanat), gesenkt werden. In diesem Fall sind die Mischungsverhältnisse bei der Weiterverarbeitung vorzugsweise dem Verhältnis 1 : 1 anzunähern.

Ein weiterer Grund für den Einsatz von Prepolymer kann die Vermeidung von Isocyanaten mit hohem Dampfdruck sein. Hochschmelzende und pastöse Systeme können durch Vorreaktion bei niedrigen Temperaturen verarbeitet werden. Es können andere reaktive Gruppen eingebaut werden, die z.B. Vinyl-, Phenol, Epoxy- oder Acylaminoendgruppen enthalten, welche die Anwendung anderer Härtungssysteme erlauben. Durch die Herstellung von Prepolymeren wird die Vielzahl der Reaktionsmöglichkeiten erhöht und bei gelösten PUR-Altstoffen die Qualität der Endprodukte auf ein gleiches Niveau gebracht werden.

Die Auflösung der Kunststoffe sowie die Hilfsverfahren, wie Dehydratisierung und Prepolymerherstellung, müssen unter definierten Bedingungen durchgeführt werden. Es ist bevorzugt, die Reaktionen unter Schutzgasatmosphäre durchzuführen.

Gegebenenfalls kann die Reaktion auch unter Druck oder im Vakuum und bei erhöhten Temperaturen erfolgen. Die Entfernung von Reaktionsprodukten, wie z.B. Wasser, muß möglich sein. Die gesamte Reaktion muß in einem geschlossenen System durchgeführt werden. Unerwünschte Nebenprodukte, nicht gelöste Kunststoffe und andere Verunreiniungen müssen abgetrennt werden.

Die als Reaktionsgemisch erhaltene Polyollösung oder -gel wird abgekühlt und kann ggf. nach Einstellung der Hydroxylzahl sofort weiterverarbeitet werden, indem man sie kontinuierlich dem Massestrom der Ausgangskomponenten für die Polyurethankunststoffherstellung zudosiert. Bevorzugt wird das aufbereitete Reaktionsgemisch direkt dem Mischkopf der Mehrkomponentenmischgeräte zugeführt, was eine kontinuierliche und besonders effiziente Arbeitsweise erlaubt. Alternativ kann das aufbereitete Reaktionsgemisch zu einem späteren Zeitpunkt weiterverarbeitet werden.

### Beispiel 1

24 kg eines trifunktionellen Epsilon-Caprolactonpolymers mit dem Molekulargewicht von 540, der Hydroxylzahl von 310, der Viskosität von 200 m.Ps.s bei 55°C und dem spezifischen Gewicht von 1,072 werden auf 180°C erwärmt. In diese erwärmte Lösung werden unter Rühren 24 kg geflockte Weichschaumabfälle kontinuierlich zugegeben. Nach der Zugabe wird die Mischung etwa 1 Stunde weitergerührt. Es wird eine klare, mittelviskose Lösung erhalten, die auf 60°C abgekühlt wird. Der Mischung werden auf 100 Teile 2,0 Teile Wasser, 1,0 Teil Silikonschaumstabilisator, 1,5 Teile DMEA (Dimethylethanolamin) zugesetzt. Diese Mischung wird auf einer Hochdruckschaummaschine mit 140 Teilen MDI (Diphenylmethan-4-4'-diisocyanat) vermischt. Es wird ein feinporiger Hartschaum mit einem Raumgewicht von 24 kg/m³ und hoher Druckfestigkeit erhalten.

### Beispiel 2

24 kg des Hydroxypolymers aus Beispiel 1 werden auf 190°C erwärmt. Der Mischung werden 12 kg eines PUR-Schaumgemisches aus Hart- und Weichschaumabfällen und 12 kg Polycarbonatabfälle kontinuierlich zugegeben. Die Mischung wird nach 1 Stunde Rührzeit auf 80°C abgekühlt. Nach Zugabe von Katalysatoren, Wasser und Silikonstabilisatoren im Verhältnis wie in Beispiel 1 werden 100 Teile der klaren Mischung nach Zugabe von 120 Teilen MDI auf einer Hochdruckmaschine aufgeschäumt. Es wird ein feinporiger, druckfester Hartschaum mit einem Raumgewicht von 26 kg/m³ erhalten, der sich für die Verwendung als Isolierortschaum anbietet.

### Beispiel 3

40 kg eines Hydroxypolymers wie in Beispiel 1 werden auf 50°C erwärmt. Es werden in einem Vormischer 10 kg zerkleinerte Schaumreste weicher und harter Konsistenz aus der Kühlschrankentsorgung mit einer Korngrößenverteilung von 0,01 bis 2 mm im Druchfluß zudosiert. Der Schaum enthält Verunreinigungen von ca. 10 %, die aus Farben- und Lackresten, Papier, Klebstoffen, Aluminiumfolien und Elastomeren bestehen. Die Mischung wird durch ein Vielkammerkreiselgerät gepreßt, wobei sie sich auf ca. 60 bis 80°C erhitzt. Es wird eine Paste erhalten, deren Polyurethankunststoffanteile teilweise oberflächlich, in der Hauptsache aber vollständig gequollen sind. Die Paste kann leicht mit den Hilfsstoffen aus Beispiel 1 versetzt und mit MDI im Verhältnis 100 Teile Reaktionsgemisch und 130 Teile Isocyanat in einem Niederdruckmischer geschäumt werden. Es wird ein feinporiger Hartschaum mit hoher Druckfestigkeit erhalten. Die Quellkörper können im Schaum nicht mehr erkannt werden. Die ungelösten Metallfolien sind gleichmäßig im Schaum verteilt; sie verstärken die Schaumfestigkeit. Die Schaumbildung, die Steigzeit und eine Dichte von 30 kg/m³ werden im Vergleichsversuch ohne Altschaumzusatz ebenfalls erreicht.

### Beispiel 4

Autoshredder, der zu 75 % aus weichem PUR-Schaum besteht und mit PVC-Folienresten, Polyethylenfolien, Kautschukleitungen und Kabelabfällen sowie Styrolkunststoffen, Holz- und Leichtmetallresten versehen ist, wird auf eine Korngröße von 0 bis 3 mm feinzerkleinert und durch Waschen mit heißem, netzmittelhaltigem Wasser von Öl, Fett, Bremsflüssigkeit und Schmutz befreit und anschließend getrocknet. 24 kg dieses Mehls werden in 24 kg eines trifunktionellen Caprolactonpolyols mit der Hydroxylzahl 310 und einem Molekulargewicht von 540 bei 180°C mit 300 U/Min. behandelt. Es wird eine viskose Flüssigkeit erhalten, in der unlösliche Partikel vorhanden sind, die aus Holz, Epoxyharzresten, Gummi und Metallfolien bestehen. Die festen Verunreinigungen werden abfiltriert. Die Mischung wird bei 80°C mit dem Schaumhilfsmittel aus Beispiel 1 versetzt, wobei der Katalysatoranteil allerdings halbiert wird. Die 100 Teile dieser Mischung werden mit 130 Teilen MDI ausgehärtet. Nach einer Steigzeit von 60 Sekunden wird ein harter, homogener, feinporiger Schaum mit einer Dichte von 30 kg/m³ und hoher Druckfestigkeit erhalten.

### Beispiel 5

Eine Reaktionsmischung mit einer Hydroxylzahl von 380 aus difunktionellem Epsilon-Caprolactonpolyol und gelösten PUR-Weichschaumresten zu gleichen Teilen wird bei 180°C im angesäuerten Medium solange an Zinkplatten vorbeigeführt, bis eine Hydroxylzahl von 300 erreicht wird. Nach Ende der Reaktion werden 500 g Calciumcarbonat zugesetzt und die Mischung filtriert. Die flüssige Masse wird mit den gleichen Katalysatoren wie in Beispiel 1 versetzt und in einem Hochdruckmischer im Verhältnis 100 : 90 mit MDI versetzt. Es wird ein feinporiger, zähelastischer Schaum erhalten. Die Ausgangslösung, deren Hydroxylzahl nicht vermindert wurde, wird in gleicher Weise geschäumt, der Schaum ist ebenso gleichmäßig und feinporig aber härter als der Schaum, der aus der Reaktionslösung mit der verminderten Hydroxylzahl hergestellt wurde.

### Beispiel 6

91 kg Epsilon-Caprolactonpolymer wie in Beispiel 1 beschrieben werden mit 39 kg gemischten Schaumabfällen versetzt und bei 180°C gerührt. Nach Beendigung der Zugabe wird noch 1 Stunde gerührt, die Gesamtrührzeit beträgt 2,5 Stunden. Es wird ein hochviskoses Polyol erhalten, dessen Viskosität für die Verarbeitung auf einer Hochdruckanlage zu hoch ist. 130 kg dieser Mischung werden dann unter Stickstoff mit 26 kg MDI vermischt und 3 Stunden bei 50°C gerührt. Die Mischung wird ohne weitere Zusätze bei dieser Temperatur auf einer Hochdruckmaschine mit MDI im Verhältnis 100 : 100 vermischt. Es wird ein Schaum mit einer Steigzeit von 30 Sekunden und einer Dichte von 35 kg/m³ erhalten. Die Schaumstruktur ist feinporig, gleichmäßig und gemischt offen- und geschlossenporig.

### Beispiel 7

Die Polyolmischung aus Beispiel 6 wird mit den Katalysatoren wie in Beispiel 1 vermischt und dann unter den gleichen Bedingungen wie in Beispiel 6 aber bei Raumtemperatur verschäumt. Die Reaktionszeit ist so kurz, daß eine Verarbeitung nicht möglich ist. Es wird eine grobporige, löchrige Schaumstruktur erhalten, die hauptsächlich aus geschlossenen Poren besteht und nach etwa 1 Stunde stark zusammenfällt. Die Dichte kann wegen der Struktur nicht bestimmt werden.

## Patentansprüche

1. Verfahren zur Verwertung von kompakten oder porösen, ganz oder teilweise aus Polyurethan bestehenden Kunststoffen unter Aufbereitung der Kunststoffe zu einem Reaktionsgemisch und Weiterverarbeitung zu neuen Polyurethanprodukten in einem Diisocyanat-Polyadditions-Verfahren,
**dadurch gekennzeichnet, dass**
die Aufbereitung zu einem Reaktionsgemisch erfolgt, indem man die Kunststoffe in einem Polyol oder einer Mischung von Polyolen, ausgewählt aus Polymeren des ε-Caprolactons und dessen Derivaten, löst und
man das Reaktionsgemisch zu neuen Polyurethanprodukten weiterverarbeitet.

2. Verfahren nach Anspruch 1, **dadurch gekennzeichnet, daß** man ε-Caprolactonacrylatpolyole verwendet.

3. Verfahren nach Anspruch 1 oder 2, **dadurch gekennzeichnet, daß** man Polymere des Epsilon-Caprolactons mit Vinylgruppen oder mit endständigen Hydroxyl- oder Acrylatgruppen mit unterschiedlichen Polymerisationsgraden verwendet.

4. Verfahren nach Anspruch 1, **dadurch gekennzeichnet, daß** man Kunststoffe, die neben Polyurethankunststoffen zusätzliche Kunststoffe, Harze, Wachse, Elastomere, Farben, Lacke, Papier, Metallfolien, organische und/oder mineralische Fasern enthalten, verwendet.

5. Verfahren nach Anspruch 1, **dadurch gekennzeichnet, daß** man zur Modifizierung der Endprodukte die in Anspruch 4 genannten Stoffe und ggf. weitere Zusatzstoffe, ggf. in gelöster oder gequollener Form, vor, während und/oder nach der Aufbereitung der Kunststoffe dem Reaktionsgemisch zugibt.

6. Verfahren nach Anspruch 5, **dadurch gekennzeichnet, daß** man als Zusatzstoffe Weichmacher, Flammschutzmittel, Pigmente, Füllstoffe und/oder Fasern verwendet.

7. Verfahren nach einem oder mehreren der vorhergehenden Ansprüche, **dadurch gekennzeichnet, daß** man die Kunststoffe und ggf. die Zusatzstoffe in Schneidmühlen oder Shreddern auf eine Korngröße von ca. 10 bis 30 mm vorzerkleinert und ggf. weiter in Zentrifugalmühlen auf eine Korngröße von < 1 mm Durchmesser fein zerkleinert.

8. Verfahren nach einem oder mehreren der vorhergehenden Ansprüche, **dadurch gekennzeichnet, daß** man zur Beschleunigung des Lösevorgangs oberflächenaktive Substanzen und/oder Lösungsvermittler zusetzt.

9. Verfahren nach einem oder mehreren der vorhergehenden Ansprüche, **dadurch gekennzeichnet, daß** man die Hydroxylzahl des Reaktionsgemisches durch
1) Verestern mit organischen, anorganischen Säuren, Säureanhydriden und/oder Organophosphorderivaten
2) Verethern
3) Umsetzen mit Aminoharzen und/oder mit Hilfe
4) katalytischer Dehydration an geeigneten Metallen, ggf. unter Zusatz säurehaltiger Hilfsstoffe,
einstellt.

10. Verfahren nach einem oder mehreren der vorhergehenden ansprüche, **dadurch gekennzeichnet, daß** man den Löseprozeß in einem zumindest teilweise mit einem Dehydrationskatalysator ausgekleideten Reaktionskessel durchfuhrt.

11. Verfahren nach Anspruch 9 oder 10, **dadurch gekennzeichnet, daß** man als Dehydrationskatalysator Zink oder Palladium verwendet.

12. Verfahren nach einem oder mehreren der vorhergehenden Ansprüche, **dadurch gekennzeichnet, daß** man faserhaltige Kunststoffe nach der Aufbereitung zur Freilegung der Einzelfasern defibrilliert.

13. Verfahren nach Anspruch 1, **dadurch gekennzeichnet, daß** das Reaktionsgemisch durch chemische Umsetzung mit einem geeigneten Isocyanat oder anderen Härtersystemen unter Schutzgas und unter Verwendung von Druck, gegebenenfalls im Vakuum und bei erhöhten Temperaturen, in ein Polyurethanpräpolymer umgesetzt wird.

14. Verfahren nach einem oder mehreren der obigen Ansprüche,
**dadurch gekennzeichnet, daß** das nach Anspruch 1 erhaltene Reaktionsgemisch dem Massestrom bei der PUR-Neuverschäumung und/oder in den Mischkopf der PUR-Mischgeräte zugegeben wird.

## Claims

1. Process for utilising compact or porous plastics consisting completely or partly of polyurethane with regeneration of the plastics to form a reaction mixture and further processing to form novel polyurethane products in a diisocyanate polyaddition process, **characterised in that** the regeneration to form a reaction mixture is effected, **in that** the plastics are dissolved in a polyol or a mixture of polyols, selected from polymers of ε-caprolactone and its derivatives, and the reaction mixture is further processed to form novel polyurethane products.

2. Process according to claim 1, **characterised in that** ε-caprolactone acrylate polyols are used.

3. Process according to claim 1 or 2, **characterised in that** polymers of epsilon-caprolactone having vinyl groups or having terminal hydroxyl or acrylate groups with different degrees of polymerisation are used.

4. Process according to claim 1, **characterised in that** plastics, which contain, in addition to polyurethane plastics, additional plastics, resins, waxes, elastomers, dyes, paints, paper, metal foils, organic and/or mineral fibres, are used.

5. Process according to claim 1, **characterised in that** to modify the end products, the materials mentioned in claim 4 and optionally further additives, optionally in dissolved or swollen form, are added to the reaction mixture before, during and/or after regeneration of the plastics.

6. Process according to claim 5, **characterised in that** plasticisers, flame-retardants, pigments, fillers and/or fibres are used as additives.

7. Process according to one or more of the preceding claims, **characterised in that** the plastics and optionally the additives are pre-comminuted in cutting mills or shredders to a grain size of about 10 to 30 mm and optionally further finely comminuted in centrifugal mills to a grain size of < 1 mm diameter.

8. Process according to one or more of the preceding claims, **characterised in that** surfactant substances and/or solubility promoters are added to accelerate the dissolving process.

9. Process according to one or more of the preceding claims, **characterised in that** the hydroxyl number of the reaction mixture is adjusted by
1) esterifying using organic, inorganic acids, acid anhydrides and/or organophosphorus derivatives
2) etherifying
3) reacting with amino resins and/or with the aid of
4) catalytic dehydration on suitable metals, optionally with addition of acid-containing auxiliaries.

10. Process according to one or more of the preceding claims, **characterised in that** the dissolving process is carried out in a reaction vessel lined at least partly with a dehydration catalyst.

11. Process according to claim 9 or 10, **characterised in that** zinc or palladium is used as dehydration catalyst.

12. Process according to one or more of the preceding claims, **characterised in that** fibre-containing plastics are fibrillated after regeneration to expose the individual fibres.

13. Process according to claim 1, **characterised in that** the reaction mixture is reacted to form a polyurethane prepolymer by chemical reaction with a suitable isocyanate or other hardener systems under protective gas and using pressure, optionally in vacuum and at elevated temperatures.

14. Process according to one or more of the above claims, **characterised in that** the reaction mixture obtained according to claim 1 is added to the mass flow during PUR re-foaming and/or in the mixing head of the PUR mixing devices.

## Revendications

1. Procédé de traitement de matières synthétiques compactes ou poreuses, formées en totalité ou partiellement de polyuréthane, accompagné d'une préparation des matières synthétiques pour obtenir un mélange de réaction et d'un retraitement pour redonner de nouveaux produits à base de polyuréthane, dans un procédé travaillant par polyadditions au diisocyanate,
**caractérisé en ce que**,
la préparation pour obtenir un mélange de réaction s'effectue par le fait que l'on dissout les matières synthétiques dans un polyol ou un mélange de polyols, sélectionnés parmi des polymères du ε-caprolactone et ses dérivés, et
on retraite le mélange de réaction pour obtenir de nouveaux produits à base de polyuréthanne.

2. Procédé selon la revendication 1, **caractérisé en ce qu'**on utilise des polyols d'acrylate de ε-caprolactone.

3. Procédé selon la revendication 1 ou 2, **caractérisé en ce qu'**on utilise des polymères du epsilon-caprolactone ayant des groupes vinyles ou ayant des groupes finaux hydroxyles ou acrylates, ayant des degrés de polymérisation différents.

4. Procédé selon la revendication 1, **caractérisé en ce que** l'on utilise des matières synthétiques qui, outre des matières synthétiques à base de polyuréthane, contiennent à titre supplémentaire des matières synthétiques, des résines, des cires, des élastomères, des colorants, des vernis, du papier, des feuilles métalliques, des fibres organiques et/ou minérales.

5. Procédé selon la revendication 1, **caractérisé en ce que**, pour obtenir la modification des produits finaux, on ajoute au mélange de réaction les substances citées à la revendication 4 et, le cas échéant, d'autres additifs, le cas échéant sous forme dissoute ou gonflée, pendant et/ou après la préparation des matières synthétiques.

6. Procédé selon la revendication 5, **caractérisé en ce qu'**on utilise comme additifs des plastifiants, des agents de protection contre les flammes, des pigments, des charges et/ou des fibres.

7. Procédé selon l'une ou plusieurs des revendications précédentes, **caractérisé en ce qu'**on procède à un prébroyage des matières synthétiques et, le cas échéant, des additifs dans des broyeurs à couteaux ou bien des déchiqueteurs, pour atteindre une taille de grain d'environ 10 à 30 mm et, le cas échéant, on continue par un broyage fin dans des broyeurs centrifuges, pour atteindre une taille de grain < 1 mm de diamètre.

8. Procédé selon l'une ou plusieurs des revendications précédentes, **caractérisé en ce que**, pour accélérer le processus de dissolution, on ajoute des substances tensioactives et/ou des dissolvants.

9. Procédé selon l'une ou plusieurs des revendications précédentes, **caractérisé en ce que** l'on règle l'indice hydroxyle du mélange de réaction par
1) estérification avec des acides organiques, non organiques, des anhydrides d'acide et/ou des dérivés organophosphorés
2) on procède à une éthérification
3) on convertit avec des résines amino et/ou à l'aide
4) d'une déshydratation catalytique sur des métaux appropriés, le cas échéant avec addition de produits auxiliaires contenant des acides.

10. Procédé selon l'une ou plusieurs des revendications précédentes, **caractérisé en ce que** l'on effectue le processus de dissolution dans un récipient de réaction, au moins partiellement revêtu d'un catalyseur de déshydratation.

11. Procédé selon la revendication 9 ou 10, **caractérisé en ce qu'**on utilise du zinc ou du palladium comme catalyseur de déshydratation.

12. Procédé selon l'une ou plusieurs des revendications précédentes, **caractérisé en ce que** l'on défibrile des matières synthétiques contenant des fibres, après la préparation, dans le but de dégager les fibres individuelles.

13. Procédé selon la revendication 1, **caractérisé en ce que** l'on convertit en un pré-polymère de polyuréthanne le mélange de réaction par une conversion chimique faite à l'aide d'un isocyanate approprié, ou bien d'autres systèmes durcissants, sous une atmosphère de gaz protecteur et avec utilisation de pression, le cas échéant sous vide et à des températures élevées.

14. Procédé selon l'une ou plusieurs des revendications précédentes, **caractérisé en ce que** le mélange de réaction obtenu selon la revendication 1 est ajouté au débit masse lors du nouveau moussage du PUR et/ou dans la tête de mélange des mélangeurs de PUR.
